# EUROPEAN PATENT SPECIFICATION

(11) **EP 0 583 848 B1**
(45) Date of publication and mention of the grant of the patent: **28.10.1998**
(21) Application number: 93202429.2
(22) Date of filing: 18.08.1993
(51) Int. Cl.: C08L 73/00

(54) **Copolymer compositions comprising a copolymer and one or more lubricating additives**
Copolymerzusammensetzung enthaltend ein Copolymer und ein oder mehrere Schmiermittelzusätze
Compositions de copolymère renfermant un copolymère et un ou plusieurs additifs lubrifiants

(30) Priority: 20.08.1992 EP 92202553
(43) Date of publication of application: 23.02.1994
(73) Proprietor: SHELL INTERNATIONALE RESEARCH MAATSCHAPPIJ B.V., 2596 HR Den Haag (NL)
(72) Inventor: Kormelink, Hendrik Geert-Jan, NL-1031 CM Amsterdam (NL); Kramer, Arie, NL-1031 CM Amsterdam (NL)

(56) References cited:
- US-A- 4 816 514
- US-A- 5 079 340

## Description

The invention relates to copolymer compositions comprising a major amount of a copolymer of carbon monoxide with one or more ethylenically unsaturated compounds and a minor amount of one or more lubricating additives.

Copolymers of carbon monoxide and one or more ethylenically unsaturated compounds are known. In these copolymers the units originating from carbon monoxide substantially alternate with the units originating from the ethylenically unsaturated compounds. In copolymers, wherein the units originating from ethylenically unsaturated compounds are derived from different unsaturated compounds (A, B, ...), the carbon monoxide originating units alternate with units originating from A, B, .... such that usually among the units originating from ethylenically unsaturated compounds the units derived from A, B, ... etc. are randomly distributed. The copolymers may be prepared by one of the methods described in the art. These methods generally consist of reacting the monomers i.e., carbon monoxide and the ethylenically unsaturated compound(s), under polymerization conditions in the presence of a suitable catalyst.

A convenient preparation method is described in EP-A-181014. According to this method the monomers are copolymerized in the presence of a catalyst comprising a Group VIII metal selected from palladium, cobalt and nickel, preferably palladium, an anion of a carboxylic acid with a pKa lower than 2 and a bidentate ligand comprising two phosphorus, arsenic or antimony atoms. The copolymers obtained according to this, or a similar preparation method, are relatively high molecular weight compounds, having utility as thermoplastics for sheets, fibres or films, and may be used for the manufacturing of packaging materials for foods and drinks, for the production of structural articles and parts for the car industry and for various applications in the domestic sphere. Typically the copolymers are semicyrstalline materials and have a high melting point, usually of 200 °C or more. Although this is of value for many applications such as the aforesaid production of shaped articles and car parts, in some instances the high melting point of the copolymers forms a complication.

It will be appreciated that during melt processing of the copolymers, e.g. for fibre or sheet applications, and for injection moulding applications, the copolymers have to be subjected to high temperatures in view of their high melting points. At these high temperatures, the melt tends to become sticky and hence will adhere strongly to the surfaces of the equipment thus adversely affecting the processability of the melt. At the said high temperatures, chemical changes may occur to an extent which is no longer negligible, causing cross-linking and formation of degradation products. These have generally a negative effect on the physical and mechanical properties of the melt. For example in melt extrusion the said chemical changes will result in a substantial increase in viscosity, as a function of residence time. The removal of built-up heat will become more difficult and a reduction in melt stability usually occurs.

Various attempts have been made with the purpose of improving the melt flow properties of the copolymers. Thus it has been proposed to add one or more stabilizers to the melt in order to reduce in the final product formation of amorphous polymer material and to minimize a loss in crystallinity. Examples of suitable stabilizers in this respect are aluminium compounds such as aluminium trialkoxides and hydrolysis products thereof. Significant improvements in the flow properties of the copolymers have been achieved by adding lubricating additives to the melt. A class of suitable additives, disclosed in EP-A-453010, consists of compounds of the general formula X(R)ₙ, wherein X represents an n valent polar moiety comprising 1-4 polar groups, where n is 2, 3 or 4 and each R, independently, represents a monovalent hydrocarbyl radical having 5 to 30 carbon atoms which is attached to a polar group. Examples of suitable representatives of this class of lubricating additives are N,N'-bisamides of ethylene diamines, glycerol 1,3-diesters, glycerol triesters and diesters of 2,2-bis(4'-hydroxyphenyl)propane.

Lubricating additives of the aforesaid class come into the category of internal lubricants, i.e. lubricants with a high degree of compatibility with the molecules in the melt and which, owing to their lubricating properties, reduce the friction within the melt and reduce the viscosity increase when the melt is held under shear, e.g. during melt extrusion.

It has also been tried to improve the melt flow properties of the copolymers by addition of an external lubricating additive, i.e. a compound which is frequently understood to be to a much lesser degree compatible with the melt, but which has lubricating properties at the interface of the melt and the (metal) surfaces of the processing equipment. However, these trials have been unsuccesful. As it appeared, the addition of compounds, known for polyolefins as suitable external lubricating additives, e.g. waxes, does not have any favourable effect on the melt flow properties of the copolymer melts of the present application. Although a certain slip between melt and equipment surface is considered desirable, it is believed that the external lubricating additives so far investigated, cause the formation of an actual slipping layer between the copolymer melt and the equipment surfaces, as a result of which the copolymer melt becomes unprocessable.

It has now been found that certain compounds can be used as external lubricating additives, which effectively prevent sticking of the copolymer melt to the surfaces of the processing equipment, without having an adverse effect on the processability of the melt.

The invention relates to copolymer compositions comprising a substantially alternating copolymer of carbon monoxide and one or more ethylenically unsaturated compounds and from 0,05%w to less than 10% w, based on the weight of the composition, of one or more additives having an average molecular weight of at least 500 and selected from oxidized polyolefins and copolymers of olefins and unsaturated esters.

The additives of this invention act as external lubricating additives in the copolymers of carbon monoxide and ethylenically unsaturated compounds.

This find is surprising as similar compositions of copolymers of carbon monoxide and ethylenically unsaturated compounds and copolymers of ethene and unsaturated carboxylic acids can be used for coating of metal objects by flame-spraying (cf. EP-A-339472), implying good adhesion between the metal surface and these compositions.

Although there is no strict upper limit for the molecular weight of the lubricating additives of the invention, it will be clear that the handling of an additive and, in particular, its incorporation into the copolymer composition, will be more difficult if the additive chosen has an extremely high molecular weight. Preference is therefore given to lubricating additives of which the average molecular weight is less than 10000. Most preferred are lubricating additives with an average molecular weight in the range of 1000 to 9000.

The lubricating additives of this invention are formed by long-chain hydrocarbons modified with oxygen containing polar groups. The polar group(s) may be located terminally or may be attached to non-terminal carbon atoms in the chain. Preferably the amount of polar groups per molecule is selected such that the oxygen content in the lubricating additive is less than 25% by weight, suitably at least 0.2% by weight, in particular between 0.5 and 10% by weight.

In one embodiment of the invention the compounds to be incorporated in the copolymer compositions are polyolefins, such as polyethene and polypropene, modified by oxidizing, whereby some chain-scission may occur and smaller molecules having one or more oxygen containing end groups may be formed. Preferred compounds consist of commercially available oxidized polyolefins, in particular an oxidized polyethene having a molecular weight of 6000 and an acid number of 16 mg KOH/g. In another embodiment of the invention the lubricating additives comprise copolymers of olefins such as ethene and unsaturated esters, such as vinylacetate. A suitable example is a commercially available copolymer of 90 %w ethene with 10 %w of vinyl acetate, the copolymer having a molecular weight of 6500.

It has moreover been found that a further improvement in melt flow properties of the compositions of the invention is achieved by the additional presence in the compositions of one or more internal lubricating additives. Surprisingly the resulting improvement considerably exceeds the combined improvements observed when either the external or the internal lubricating additive is solely incorporated in the composition.

A strong synergistic effect is in particular observed if as internal lubricating additive a compound of one of the general formulae Y(NR^{'}-C(O)R)ₙ and Y(C(O)-NR^{'}-R)ₙ is added, in which formulae Y represents an n valent alkyl radical having up to 6 carbon atoms, R' is hydrogen or an alkylgroup with up to 4 carbon atoms, R represents a substituted or non-substituted hydrocarbyl radical having from 5 to 30 carbon atoms and n is 2, 3 or 4. Preferred internal lubricating additives are compounds of the aforesaid formulae wherein Y represents an n valent alkylradical having up to 4 carbon atoms, R' is hydrogen, R represents a substituted or non-substituted alkylgroup having from 8 to 20 carbon atoms and up to two ethylenically unsaturated linkages and n is 2 or 3. Typical examples of suitable internal lubricating additives are N,N'-dilinoleylsuccinamide, N,N'-dimethyl-N,N'-dimyristoyltrimethylene-diamine, N,N'-diethyl-N,N'-dioleoyltetramethylenediamine, N,N'-dipalmitylsuccinamide, N,N'-dimethyl-N,N'-dicetyl-succinamide, N,N'-dilauroyl-trimethylenediamine and N,N'-distearoylethylenediamine. A significant synergistic effect on the melt flow properties, in particular as regards a reduction in viscosity without adverse effect on the melt stability, has been observed when the copolymer compositions of the invention comprise N,N'-distearoylethylenediamine.

Another suitable additional lubricating additive is hydrated recinusoil, having a molecular weight of 938. This additional additive is in particular recommended, if the composition comprises also one or more pigments.

The amount of external lubricating additives in the compositions is less than 10 %w, based on the weight of the composition. If an internal additive is also present, the total amount of external and internal lubricating additives is typically less than 10% based on the weight of the composition. Preferably the total amount of lubricating additives is in the range of 0.05 to 3%, most preferably in the range of 0.1 to 1%, on the same basis. The molar ratio between external and internal lubricating additives is not critical, but is preferably selected in the range of 0.05 to 2.2.

If desired, in addition to the lubricating additive(s), the compositions of the invention may comprise one or more further additives, such as additives for improving oxidative stability and/or UV stability. Such additives may be selected from the group consisting of sterically hindered phenolic compounds, for example 2,5-di-alkylphenols, copolymers of ethylene and acrylic acid or methacrylic acid, aromatic amines, for example 4,4'-bisbenzyl diphenylamine or aluminium hydroxides, for example bayerite. Moreover, the compositions may comprise one or more pigments, the presence of which may be desirable for specific applications, for example automotive parts.

The invention also relates to a method for improving the flow properties of copolymers of carbon monoxide with one or more ethylenically unsaturated compounds, comprising the addition of one or more external lubricating additives of this invention in a quantity of less than 10 %w, based on the weight of the resulting composition, and optionally also of one or more internal lubricating additives.

The external lubricating additive(s) may be introduced into the melt processing equipment in various ways. A convenient procedure comprises admixing the external lubricating additive(s) and, if present, also the internal lubricating additive(s) with the copolymers before these are introduced in the processing equipment. If desired, the lubricating additives may be added to the copolymers after these have been charged to the processing equipment.

The compositions of the invention comprise a major amount of copolymers of carbon monoxide and one or more ethylenically unsaturated compounds. As ethylenically unsaturated compounds are in particular recommended compounds consisting exclusively of carbon and hydrogen. If desired ethylenically unsaturated compounds which in addition comprise one or more heteroatoms may be used as monomer in the preparation of copolymers with carbon monoxide, for example unsaturated esters such as vinyl acetate or allyl acetate. Preferred monomers are unsaturated hydrocarbons. Suitable unsaturated hydrocarbons include lower olefins such as ethene, propene, butene-1, aromatic compounds such as styrene and alpha-methylstyrene and cyclic olefins such as cyclopentene. In particular preferred are ethene and a mixture of ethene and propene. From these monomers (by reaction with carbon monoxide), ethene/carbon monoxide copolymers and ethene/propene/carbon monoxide terpolymers, respectively, are prepared. As has been explained above, in the said ethene/carbon monoxide copolymers the units originating from carbon monoxide substantially alternate with those originating from ethene and in the said ethene/propene/carbon monoxide terpolymers the units originating from carbon monoxide substantially alternate with the - randomly distributed-units originating from ethene and propene.

Typically the copolymers participating in the compositions of the invention, have a relatively high intrinsic viscosity, or limiting viscosity number (LVN). Preferred compositions comprise copolymers of which the LVN is in the range of 1.0 and 2.5 dl/g, measured at 60 °C in m-cresol.

The bulk density of the copolymers present in the compositions is not critical, but for most applications copolymers are selected having a bulk density of at least 0.2 g/l.

The invention will be illustrated by the following examples.

### Example 1

A copolymer composition was prepared by dry blending of a terpolymer of carbon monoxide, ethene and propene in the form of a powder, having a melting point of 220 °C and a limiting viscosity number (LVN) of 1.8 dl/g (measured in m-cresol at 60 °C), 0.5% by weight of an anti-oxidant (2.6-di-t.butyl-4-methylphenol) and 0.5% by weight of the lubricating additive(s) to be investigated.

The equipment used was a commercial torque rheometer with mixing head, equipped with roller blades. This is a well-known instrument for measuring the torque, necessary to apply a constant shear regime in a thermostatically heated mixing chamber. An amount of 55 grammes of the copolymer composition was charged to the mixing chamber of the rheometer. The spindle speed was set at 50 rpm, the temperature of the mixing chamber at 240 °C.

Measurements were made of the initial torque increase (slope) which is indicative of the cross-linking rate, of the time to maximum torque which is proportional to the degradation time, of the maximum attainable torque level which relates to the friction between the copolymer, the maximum temperature measured in the melt, indicating the heat generated, and the inner surface of the equipment and of the polymer adhesion on the rotor blades, showing whether or not effective prevention of sticking has been achieved.

The results obtained are represented in Table 1.

**TABLE 1**

| lubricating additive | slope | time to max. torque | T max. | maximum torque level | polymer material on rotor blades |
|---|---|---|---|---|---|
| | (Nm/h) | (min) | (°C) | (Nm) | |
| - | 10.8 | 84.6 | 263 | 43.6 | yes |
| A* | 7.2 | 116 | 262 | 42.4 | yes |
| 1 | 10.8 | 88 | 253 | 36.8 | no |
| 2 | 9.6 | 93.2 | 252 | 37.2 | no |
| 3 | 6.0 | 130.4 | 252 | 34.4 | no |
| 4 | 6.0 | 142.4 | 252 | 33.2 | no |

| | | | | | |
|---|---|---|---|---|---|
| *not according to the invention. A: a commercially available amide wax of the bis-stearoyl-ethylene-diamine type with an acid value of 6 mg KOH/g. 1: a commercially available polar polyethylene wax with an average molecular weight of 6000 and an acid value of 16 mg KOH/g (ASTM-D1386). 2: a commercially available copolymer of ethene with 10 %w vinyl acetate, with an average molecular weight of 6500. 3: 0.5 %w of 1 and 0.5 %w of A. 4: 0.5 %w of 2 and 0.5 %w of A. | | | | | |

### Example 2

Melt processability of a carbon monoxide/ethene/propene copolymer composition was further investigated in an extrusiometer. Compositions as described in Example 1 were used, the amount of each lubricating additive however being 0.25% w instead of 0.5% w. The equipment used was a single screw extruder having a diameter (D) of 19 mm and a length of 25D and equipped with a mixing chamber.

Temperature settings, from mixing chamber to die, were 245, 250, 260 and 265 °C. Measurements were made of die pressures at extruder screw 35 speeds of 20, 40, 60, 80 and 100 rpm.

A lower pressure increase, resulting from each increase in screw speed, indicates a better lubricating performance of the extruded copolymer composition.

The pressure values in bar are shown in Table 2A.

**TABLE 2 A**

| Screw speed (rpm) | 20 | 40 | 60 | 80 | 100 |
|---|---|---|---|---|---|
| Lubricating additive | | | | | |
| - | 18 | 26 | 35 | 42 | 47 |
| A'* | 17 | 23 | 29 | 35 | 42 |
| 1' | 13 | 20 | 22 | 23 | 27 |
| 3' | 14 | 18 | 22 | 23 | 24 |

The torque values in Nm are shown in Table 2B.

**TABLE 2B**

| Screw speed (rpm) | 20 | 40 | 60 | 80 | 100 |
|---|---|---|---|---|---|
| Lubricating additive | | | | | |
| - | 14 | 20 | 33 | 42 | 88 |
| A'* | 15 | 17 | 20 | 26 | 35 |
| 1' | 22 | 27 | 32 | 39 | 37 |
| 3' | 7 | 8 | 9 | 10 | 11 |

| | | | | | |
|---|---|---|---|---|---|
| * not according to the invention A': 0.25% w of A (cf Example 1). 1': 0.25% w of 1 (cf Example 1). 3': 0.25% w of 1 and 0.25% w of A (cf Example 1). | | | | | |

The torque values in Nm are shown in Table 2B.

### Example 3

In a capillary rheometer, apparent viscosities were measured, as a function of shear stress at a temperature of 240 °C using a lubricating additive free and three lubricating additive containing carbon monoxide/ethene/propene copolymer compositions, viz. compositions A', 1' and 3' (cf Example 2). Two capillaries of different length/diameter ratios were used, in order to correct for capillary entrance and barrel effects:

| diameter (mm) | length/diameter |
|---|---|
| 1.27 | 39.7 |
| 1.26 | 10.2 |

The standard test procedure was as follows: the period of thermal conditioning was started 30 seconds after beginning to fill the barrel with 15 g of material; after 4 minutes when the material was considered to be in thermal equilibrium, the amount of material in the barrel was reduced to a height of 210 mm above the top of the capillary; viscosity measurements were made for each shear rate at a residence time of 5 minutes. Since degradation of the composition in the melt phase results in a rise of apparent viscosity as a function of time, a rise in force is observed as the experiment progresses. The force required to calculate the apparent viscosity and shear stress is therefore taken at a single point in the middle of the 5 minutes' period of measurement.

The results, corrected for capillary losses (Bagley correction) and for non-Newtonian flow in the capillary (Rabinowitsch correction) are shown in Table 3.

**Table 3**

| Apparant Viscosity at 240 °C (Pa.s) | | | | |
|---|---|---|---|---|
| Shear stress (kPa) | Blank | A' | 1' | 3' |
| 10 | 3000 | 2410 | 2800 | 2170 |
| 20 | 2210 | 1920 | 1580 | 1240 |
| 50 | 1050 | 1040 | 720 | 340 |
| 100 | 700 | 580 | 400 | 250 |

## Claims

1. Copolymer compositions comprising a substantially alternating copolymer of carbon monoxide and one or more ethylenically unsaturated compounds and from 0,05 %w to less than 10 %w, based on the weight of the composition, of one or more external lubricating additives having an average molecular weight of at least 500 and selected from oxidized polyolefins and copolymers of olefins and unsaturated esters.

2. Compositions as claimed in claim 1, characterized in that the lubricating additives have an average molecular weight of less than 10000.

3. Compositions as claimed in claim 1 or 2, characterized in that the lubricating additives have an average molecular weight in the range of 1000 to 9000.

4. Compositions as claimed in any of claims 1-3, characterized in that the lubricating additives have an oxygen content of less than 25% by weight.

5. Compositions as claimed in any of claims 1-4, characterized in that the lubricating additives comprise an oxidized polyethylene or a copolymer of ethene with vinylacetate, in particular a copolymer of ethene with 10 %w vinylacetate.

6. Compositions as claimed in any of claims 1-5, characterized in that they additionally comprise one or more internal lubricating additives.

7. Compositions as claimed in claim 6, characterized in that the internal lubricating additives are compounds of one of the general formulae Y(NR'-C(O)R)ₙ and Y(C(O)-NR'-R)ₙ wherein Y represents an n valent alkylradical having up to 4 carbon atoms, R' is hydrogen, R represents a substituted or non-substituted alkylgroup having from 8 to 20 carbon atoms and up to two ethylenically unsaturated linkages and n is 2 or 3, the internal lubricating additive in particular being N,N'-distearoylethylenediamine.

8. Compositions as claimed in any of claims 1-7, characterized in that the total amount of lubricating additives present in the compositions, is in the range of 0.05 to 3%, based on the weight of the composition.

9. Compositions as claimed in any of claims 1-8, characterized in that the total amount of lubricating additives present in the compositions, is in the range of 0.1 to 1%, based on the weight of the composition.

10. Compositions as claimed in any of claims 6-9, characterized in that the molar ratio between the external and the internal lubricating additives in the compositions is in the range of 0.05 to 2.2.

11. Compositions as claimed in any of claims 1-10, characterized in that they comprise a copolymer of carbon monoxide with ethene, or a terpolymer of carbon monoxide, ethene and propene, in which copolymer or terpolymer the units originating from carbon monoxide substantially alternate with the units originating from the ethylenically unsaturated compounds.

12. Method for improving flow properties of substantially alternating copolymers of carbon monoxide with one or more ethylenically unsaturated compounds, comprising the addition of one or more external lubricating additives as defined in any of claims 1-5 in a quantity from 0,05 %w to less than 10 %w, based on the weight of the resulting composition, and optionally also of one or more internal lubricating additives as defined in claim 6 or 7.

## Patentansprüche

1. Copolymerzusammensetzungen mit einem Gehalt an einen im wesentlichen alternierenden Copolymer aus Kohlenmonoxid und einer oder mehreren ethylenisch ungesättigten Verbindungen und an 0,05 Gew.-% bis weniger als 10 Gew.-%, bezogen auf das Gewicht der Zusammensetzung, eines oder mehrerer externer Gleitmitteladditive mit einem mittleren Molekulargewicht von wenigstens 500, ausgewählt unter oxidierten Polyolefinen und Copolymeren aus Olefinen und ungesättigten Estern.

2. Zusammensetzungen nach Anspruch 1, dadurch gekennzeichnet, daß die Gleitmitteladditive ein mittleres Molekulargewicht von unter 10.000 aufweisen.

3. Zusammensetzungen nach Anspruch 1 oder 2, dadurch gekennzeichnet, daß die Gleitmitteladditive ein mittleres Molekulargewicht im Bereich von 1.000 bis 9.000 aufweisen.

4. Zusammensetzungen nach einem der Ansprüche 1 bis 3, dadurch gekennzeichnet, daß die Gleitmitteladditive einen Sauerstoffgehalt von weniger als 25 Gew.-% aufweisen.

5. Zusammensetzungen nach einem der Ansprüche 1 bis 4, dadurch gekennzeichnet, daß die Gleitmitteladditive ein oxidiertes Polyethylen oder eine Copolymer aus Ethen und Vinylacetat, insbesondere ein Copolymer aus Ethen und 10 Gew.-% Vinylacetat enthalten.

6. Zusammensetzungen nach einem der Ansprüche 1 bis 5, dadurch gekennzeichnet, daß sie zusätzlich ein oder mehrere innere Gleitmitteladditive enthalten.

7. Zusammensetzungen nach Anspruch 6, dadurch gekennzeichnet, daß die inneren Gleitmitteladditive Verbindungen einer der allgemeinen Formeln Y(NR'-C(O)-R)ₙ und Y(C(O)-NR'-R)ₙ sind, worin Y einen n-wertigen Alkylrest mit bis zu 4 Kohlenstoffatomen bedeutet, R' Wasserstoff ist, R für eine substituierte oder unsubstituierte Alkylgruppe mit 8 bis 20 Kohlenstoffatomen und bis zu zwei ethylenisch ungesättigten Bindungen steht und n den Wert 2, oder 3 hat, wobei das innere Gleitmitteladditiv insbesondere N,N'-Distearoylethylendiamin ist.

8. Zusammensetzungen nach einem der Ansprüche 1 bis 7, dadurch gekennzeichnet, daß die Gesamtmenge der in den Zusammensetzungen vorliegenden Gleitmitteladditive im Bereich von 0,05 bis 3 %, bezogen auf das Gewicht der Zusammensetzung, liegt.

9. Zusammensetzungen nach einem der Ansprüche 1 bis 8, dadurch gekennzeichnet, daß die Gesamtmenge der in den Zusammensetzungen vorliegenden Gleitmitteladditive im Bereich von 0,1 bis 1 %, bezogen auf das Gewicht der Zusammensetzung, liegt.

10. Zusammensetzungen nach einem der Ansprüche 6 bis 9, dadurch gekennzeichnet, daß das Molverhältnis zwischen den externen und den inneren Gleitmitteladditiven in den Zusammensetzungen im Bereich von 0,05 bis 2,2 liegt.

11. Zusammensetzungen nach einem der Ansprüche 1 bis 10, dadurch gekennzeichnet, daß sie ein Copolymer von Kohlenmonoxid mit Ethen oder einer Terpolymer aus Kohlenmonoxid, Ethen und Propen umfassen, in welchem Copolymer oder Terpolymer die von Kohlenmonoxid abstammenden Einheiten im wesentlichen mit den aus den ethylenisch ungesättigten Verbindungen stammenden Einheiten abwechseln.

12. Verfahren zur Verbesserung der Fließeigenschaften von im wesentlichen alternierenden Copolymeren aus Kohlenmonoxid mit einer oder mit mehreren ethylenisch ungesättigten Verbindungen, enthaltend die Zugabe eines oder mehrerer externer Gleitmitteladditive, wie in einem der Ansprüche 1 bis 5 definiert, in einer Menge von 0,05 Gew.-% bis weniger als 10 Gew.-%, bezogen auf das Gewicht der gebildeten Zusammensetzung, und gegebenenfalls auch eines oder mehrerer innerer Gleitmitteladditive, wie in Anspruch 6 oder 7 definiert.

## Revendications

1. Compositions de copolymères qui comprennent un copolymère sensiblement alternant du monoxyde de carbone et d'un ou plusieurs composés éthyléniquement insaturés et de 0,05% en poids jusqu'à moins de 10% en poids, sur base du poids de la composition, d'un ou plusieurs additifs lubrifiants externes possédant un poids moléculaire moyen d'au moins 500 et choisi parmi les polyoléfines oxydées et les copolymères d'oléfines et d'esters insaturés.

2. Compositions suivant la revendication 1, caractérisées en ce que les additifs lubrifiants possèdent un poids moléculaire moyen inférieur à 10000.

3. Compositions suivant la revendication 1 ou 2, caractérisées en ce que les additifs lubrifiants possèdent un poids moléculaire moyen qui varie de 1000 à 9000.

4. Compositions suivant l'une quelconque des revendications à 3, caractérisées en ce que les additifs lubrifiants possèdent une teneur en oxygène inférieure à 25% en poids.

5. Compositions suivant l'une quelconque des revendications 1 à 4, caractérisées en ce que les additifs lubrifiants comprennent un polyéthylène oxydé ou un copolymère de l'éthène et de l'acétate de vinyle, plus particulièrement, un copolymère de l'éthène avec 10% en poids d'acétate de vinyle.

6. Compositions suivant l'une quelconque des revendicaions à 5, caractérisées en ce qu'elles comprennent, en outre, un ou plusieurs additifs lubrifiants internes.

7. Compositions suivant la revendication 6, caractérisées en ce que les additifs lubrifiants internes sont des composés qui répondent à l'une des formules générales suivantes : Y(NR'-C(O)-R)ₙ et Y(C(O)-NR'-R)n, dans lesquelles Y représente un radical alkyle n-valant, possédant jusqu'à 4 atomes de carbone, R' représente un atome d'hydrogène, R représente un groupe alkyle substitué ou non substitué possédant de 8 à 20 atomes de carbone et jusqu'à deux liaisons éthyléniquement insaturées et n est égal à 2 ou à 3, l'additif de lubrification interne étant, de manière plus particulière, la N,N'-distéaroyléthylénediamine.

8. Compositions suivant l'une quelconque des revendications 1 à 7, caractérisées en ce que la quantité totale d'additifs lubrifiants présents dans les compositions varie de 0,05 à 3%, sur base du poids de la composition.

9. Compositions suivant l'une quelconque des revendications 1 à 8, caractérisées en ce que la quantité totale d'additifs lubrifiants présents dans les compositions varie de 0,1 à 1%, sur base du poids de la composition.

10. Compositions suivant l'une quelconque des revendications 6 à 9, caractérisées en ce que le rapport molaire entre les additifs lubrifiants externes et internes dans les compositions varie de 0,05 à 2,2.

11. Compositions suivant l'une quelconque des revendications 1 à 10, caractérisées en ce qu'elles comprennent un copolymère du monoxyde de carbone et de l'éthène, ou un terpolymère du monoxyde de carbone, de l'éthène et du propène, dans lequel copolymère ou terpolymère les unités tirant leur origine du monoxyde de carbone alternent sensiblement avec les unités tirant leur origine des composés éthyléniquement insaturés.

12. Méthode pour améliorer les propriétés d'écoulement de copolymères sensiblement alternants du monoxyde de carbone et d'un ou plusieurs composés éthyléniquement insaturés, comprenant l'addition d'un ou plusieurs additifs lubrifiants externes, tels que définis dans l'une quelconque des revendications 1 à 5, en une quantité de 0,05% en poids jusqu'à moins de 10% en poids, sur base du poids de la composition résultante, et éventuellement aussi d'un ou plusieurs additifs lubrifiants internes tels que définis dans la revendication 6 ou 7.
